Europäisches Patentamt

European Patent Office

Office européen des brevets

(11) Publication number: **0 321 178**
**A1**

# EUROPEAN PATENT APPLICATION

(21) Application number: 88311766.5

(22) Date of filing: 13.12.88

(51) Int. Cl.4: **B60G 11/10** , **B60G 7/02**

(30) Priority: 16.12.87 GB 8729360

(43) Date of publication of application:
21.06.89 Bulletin 89/25

(84) Designated Contracting States:
BE DE ES FR GB IT NL

(71) Applicant: CRANE FRUEHAUF LIMITED
Toftwood
Dereham Norfolk NR19 1JF(GB)

(72) Inventor: Carr, Ivan Edward
46 Reading Road Woodley
Reading Berkshire RG5 3DB(GB)

(74) Representative: Cooke, William Douglas
Hughes Clark & Co. 63 Lincoln's Inn Fields
London WC2A 3JU(GB)

(54) Hinge mechanism.

(57) To save weight in a trailing arm (14) or spring in a goods road vehicle suspension the arm or spring is made of composite plastics material and a pivoted end thereof is formed as a pintle (20) received in a slotted socket (22, 32) fixed between hanger brackets (12) with an intermediate elastomeric bush (30). The slot permits limited articulation of the arm or spring.

FIG.3.

EP 0 321 178 A1

# HINGE MECHANISM

The present invention relates to a hinge mechanism, particularly, though not exclusively, intended for mounting a goods road vehicle suspension arm to a suspension hanger bracket.

More particulary the present invention provides a joint comprising a fixed member and a movable member hingedly connected to and extending from the fixed member, wherein the movable member has a body and a bulbous head defining a pintle received in a slotted socket in the fixed member with the body of the movable member protruding through the slot whose angular extent relative to adjacent portions of the body permits limited articulation of the movable member. In one form the socket is defined by a first part receiving the pintle and by a second part fastened to the first part to hold the pintle in radial position relative to the fixed member. In a second form the socket is a single member (e.g. a casting) of C-profile and opposed ends of the socket are closed by end plate means to maintain the pintle in axial position.

The above joint may be used for trailing arms of air suspensions for goods road vehicles, e.g. of the trailer or semi-trailer type, or may be used for carriage spring suspensions for such vehicles, or may have wider or more general uses.

Advantageously a slit bush fits between the pintle and the socket. It may be formed of an elastomer such as rubber or a low friction plastics material. It may be fitted either to the socket which is typically of steel or to the pintle which is of fibreglass. Where the socket is in two parts, they may be separated and reconnected from a radial or an axial direction. Thus the second part of the socket may be bolted into position to hold the bush and pintle in place, or it may be a part-cylindrical member which is slipped on from the side.

The invention will now be described, by way of example only, with reference to the specific forms of vehicle suspension shown in the attached drawings, in which:

Figure 1 is a view in longitudinal section of a conventional air suspension using a steel trailing arm;

Figure 2 is a view in longitudinal section of a conventional steel carriage spring suspension;

Figure 3 is a view in longitudinal section of the front part of an air suspension system provided with a hinge mechanism according to the invention;

Figure 4 is a view in longitudinal section of the front part of an air suspension system provided with a second form of the hinge mechanism;

Figure 5 is a view in longitudinal section of a single axle carriage spring suspension using a hinge mechanism according to the invention;

Figure 5a shows an alternative structure at the rear end of the spring; and

Figure 6 is a fragmentary section of a tandem axle suspension in the vicinity of an equalizer beam.

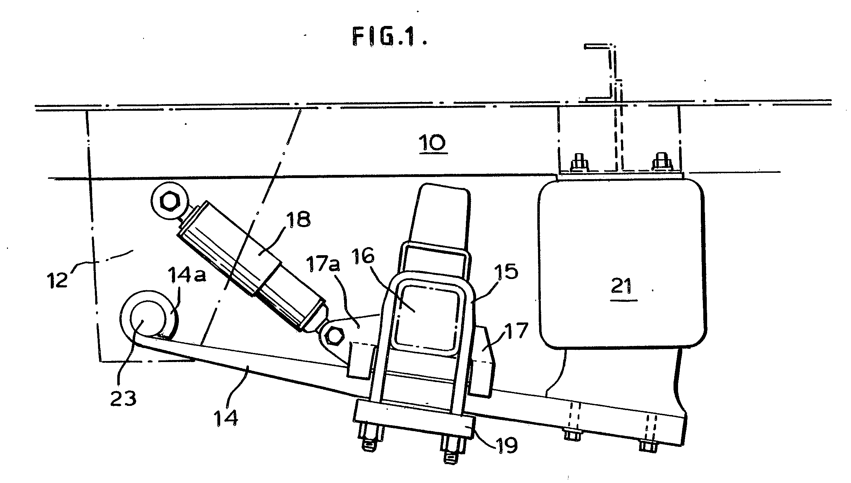

In Figure 1, a chassis longitudinal member 10 of a semi-trailer goods vehicle has a pair of depending hanger bracket plates 12. The plane of section passes between the hanger bracket plates so that only one of them appears in the drawing. A steel trailing arm 14 is pivoted at its forward end by means of an integrally formed eye 14a to a pin 23 attached between the plates 12. An axle 16 is attached to the trailing arm 14 through a saddle member 17 and a chair member 19 as is conventional in the art. A shock absorber 18 is pivoted between the nose 17a of the saddle member 17 and the hanger bracket plates 12. The rear end of the arm 14 is connected to the lower end of an air bag 21 whose upper end is connected to the chassis member 10.

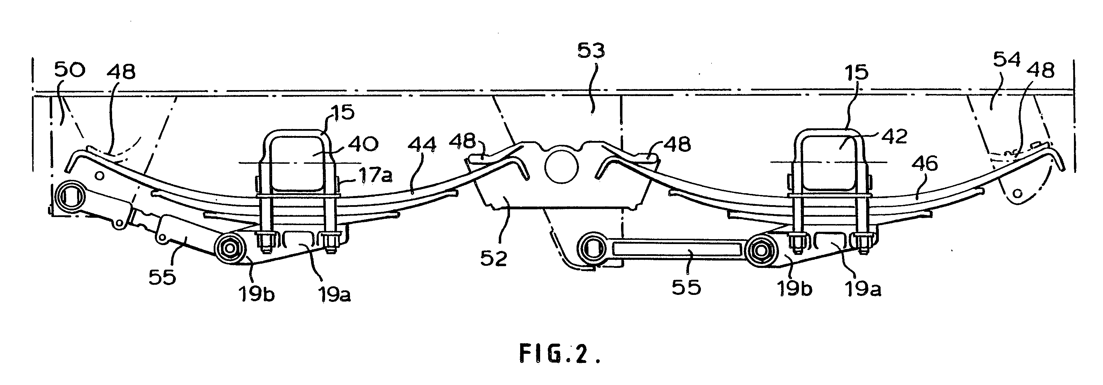

Figure 2 shows a conventional tandem axle suspension unit in which axles 40, 42 are attached by means of U-bolts 15 and saddle and chair members 17a, 19a to single-leaf or multi-leaf carriage springs 44, 46. The load from the vehicle body is transferred onto the steel springs 44, 46, by means of internal cross-plates 48 of a front hanger bracket 50, an equalizer 52 pivoted to hanger bracket 53 and a rear hanger bracket 54. The spring chairs 19a are connected at their noses 19b to respective front and middle hanger brackets 50, 53 by means of radius rods 55 which may be fixed or adjustable. The steel springs 44, 46 may be multi-leaf as shown or may be single leaf, and a similar structure is used for three-axle configuration, there being a pair of equalizers like the equalizer 52.

There is a considerable weight saving that can be achieved in suspension systems of the above two types by replacing the steel trailing arms or springs by equivalent components made of a composite plastics material such as fibreglass. For example, a steel trailing arm like the arm 14 weighs 40Kg whereas an equivalent fibreglass trailing arm weighs 14Kg. But the use of these weight saving materials has not been adopted because attempts to make an eye like the eye 14a on an arm 14 of fibreglass or the like have not been successful. The normal practice has been to make a steel eye and to find a way of clamping this to the trailing arm (or to a spring in the case of a carriage-spring suspension) by means of a metal strap or by crimping and bolting the eye to the arm or spring leaf.

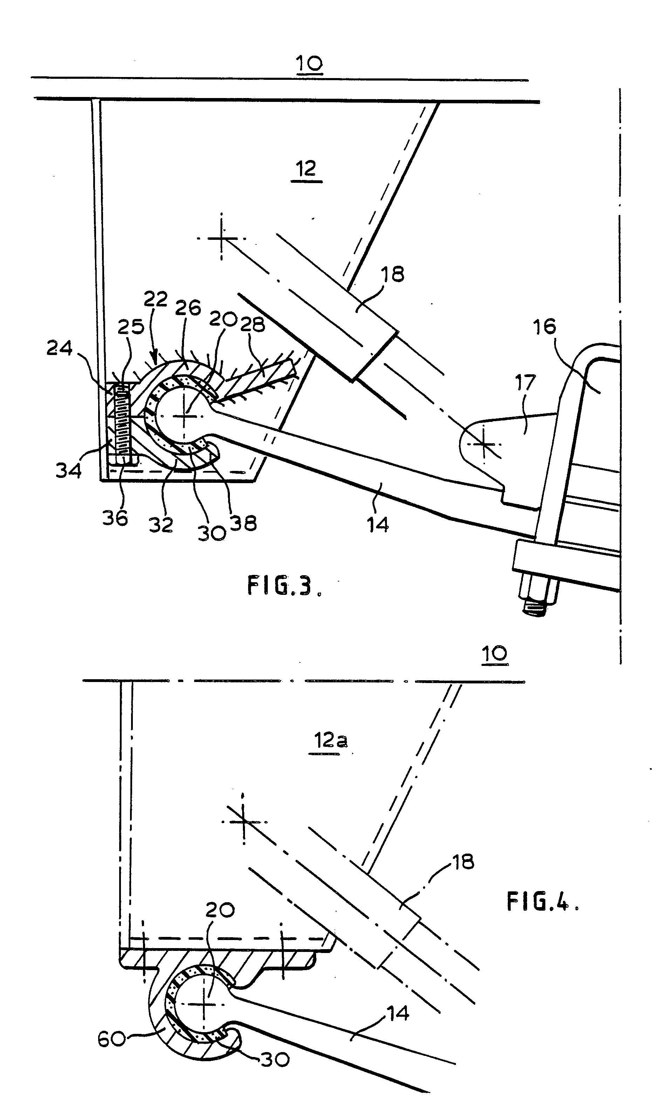

The above problem has been solved, as shown in Figure 3, by replacing the eye 14a with a bulbous end or pintle 20 which is clamped by means of an external device that applies only compressive loads to the bulbous end. A casting 22 forming the first part of a socket is welded between the hanger bracket plates 12. It is formed with a front region 24 having vertical threaded holes, a concave arcuate middle region 26 and an upwardly inclined rear or gusset region 28. The pintle 20 fits concentrically into the middle region 26 with an intermediate bush 30. It is preferred to make the bush 30 of elastomeric material such as a rubber so that shock loads are not transmitted into the hanger bracket plates 12 and so that limited joint flexion can take place under side loads. But for some applications the bush 30 may be of a less flexible material such as phosphor bronze. The socket is completed by a curvilinear second part 32 having a front region 34 formed with through holes for retainer bolts 36 and having a concave rear region 38 that completes the socket.

The pintle 20 is rotatably held between the socket parts 22, 32. It will be noted that these parts apply a compressive load to the pintle 20 and that their rear ends define a slit through which the body of the trailing arm 14 emerges. The width of the slit relative to the depth of the trailing arm body where it joins the pintle 20 is such as to allow limited articulation of the trailing arm 14 relative to the hanger bracket plates 12. The rear portion 28 of the socket part 22 defines a bluff abutment limiting over-track of the arm 14, but its main purpose is to provide further attachment between the hanger bracket plates 12 between which the casting 22 is welded as shown.

The second form of the hinge joint (Figure 4) is similar except that the castings 22, 32 are replaced by a single generally C-shaped socket casting 60 which is fastened as by welding or bolting beneath the hanger bracket plates 12a. The ends of the socket casting 60 are closed by means of cover plates (not shown) to stop sideways movement of the pintle 20 relative to the socket 60.

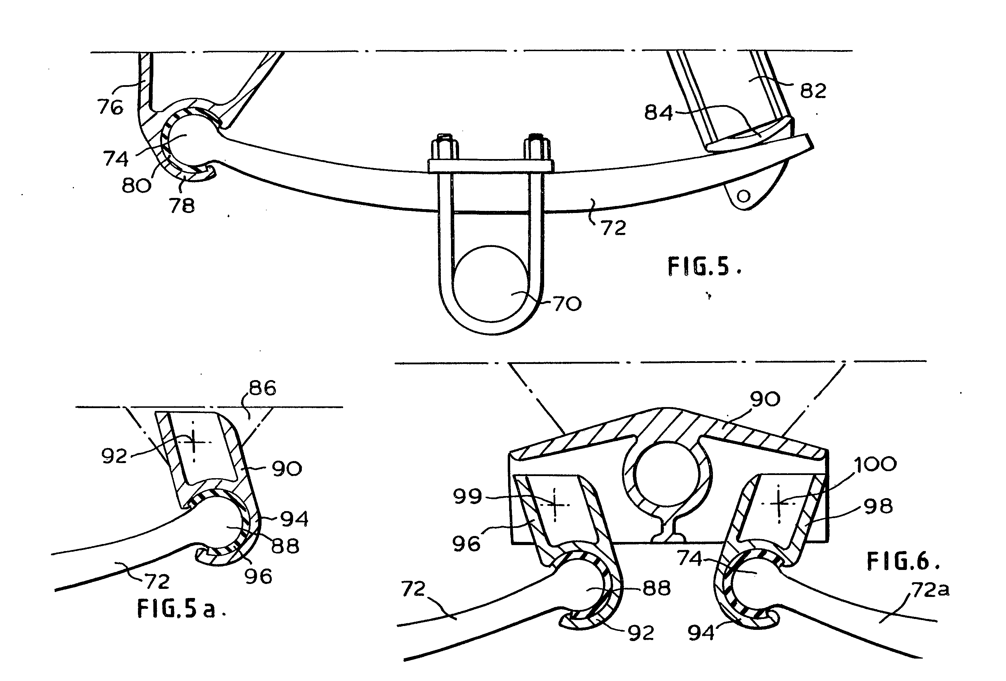

In Figure 5 a single axle suspension has an axle 70 bolted beneath a single-leaf fibreglass spring 72 which is formed at its forward end with a bulbous pintle 74. A front hanger bracket 76 is formed with a C-shaped socket formation 78 having an intermediate rubber bush 80 as previously described. The rear end of the spring 72 may simply slide through a rear hanger bracket 82 having a cross-plate 84 which rests on the spring 72 as is conventional in the art. Alternatively, as in Figure 5a the rear end of the spring 72 is formed with a second bulbous pintle 88. An oscillating link 90 is pivoted at 92 to the rear hanger bracket 86 and has at its lower end a C-shaped socket formation 94 in which the pintle is secured with a second bush 96 between pintle 88 and socket 94. The ends of the sockets 78, 94 are closed off by means of cover plates (not shown) positioned over the ends of pintles 78, 88 to stop the spring 72 from moving sideways relative to the hanger brackets 76 and 86.

A carriage spring tandem axle suspension can be constructed on the same lines with pintles like the pintles 74 received in C-profile sockets in hanger brackets depending from the chassis structure. The ends of the springs 72, 72a adjacent the equalizer 90 are formed with pintles 74, 88 received in sockets 92, 94 of oscillating links 96, 98 pivoted at 99, 100 to the equalizer 90.

## Claims

1. A joint comprising a fixed member and a movable member hingedly connected to and extending from the fixed member, characterised in that the movable member has a body (14, 72, 72a) and a bulbous head defining a pintle (20, 74, 88) received in a slotted socket (22, 32, 60, 78, 92, 94) in the fixed member with the body of the movable member protruding through the slot whose angular extent relative to adjacent portions of the body permits limited articulation of the movable member.

2. A joint according to Claim 1, characterised in that the socket is defined by a first part (22) receiving the pintle and by a second part (32) fastened to the first part to hold the pintle in radial position relative to the fixed member.

3. A joint according to Claim 1, characterised in that the socket is a single member (60, 78, 92, 94) of C-profile into which the pintle fits endwise, and opposed ends of the socket are closed by end plate means to maintain the pintle in axial position.

4. A joint according to Claims 1, 2 or 3, characterised in that a bush (30, 60, 96) of deformable material fits between the socket and the pintle.

5. A joint according to Claim 4, characterised in that the bush is of rubber.

6. A joint according to any preceding claim, characterised in that the slot is formed at one end with an outwardly directed abutment plate (28) that makes load-bearing contact with the body of the movable member at one end of its travel or may serve to adequately attach the hanger side plates.

7. A joint according to Claim 2, characterised in that the second part of the socket is fastened to the first part by means of bolts (36).

8. A joint according to any of Claims 2 to 6, characterised in that the socket is attached so as to span between a pair of suspension hanger brackets (76) of a goods road vehicle and the movable member is an arm (72) a goods road vehicle and the movable member is an arm (72) a spring of the vehicle suspension.

9. A joint according to Claim 8, characterised in that the movable member is a reinforced plastics carriage spring.

10. A joint according to Claim 8, characterised in that the movable member is a reinforced plastics trailing arm of an air suspension unit (e.g. 21).

11. A joint according to Claim 8 or Claims 9 and 10, characterised in that the carriage spring has pintles (74, 88) at opposed ends, at least one of which pintles is received in a socket attached to an oscillating lever (90) pivoted either to a hanger bracket (86) or to an equalizer beam (e.g. 52) of the suspension.

FIG.1.

FIG.2.

FIG.3.

FIG.4.

FIG.5.

FIG.5a.

FIG.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | PATENT ABSTRACTS OF JAPAN vol. 6, no. 184 (M-157)(1062) 21st September 1982; JP - A - 57 090 438 (HINO JIDOSHA) 5th June 1982 --- | 1,3,6,8 ,9,11 | B 60 G 11/10 B 60 G 7/02 |
| X | GB-A-2 160 616 (GKN) * abstract; figures 1,5 * --- | 1,4,5,8 ,9 | |
| A | EP-A-0 005 916 (GKN) * claims 10,11; figure 14 * --- | 1,4,5,8 ,9 | |
| A | FR-A-1 100 286 (DAIMLER-BENZ) * page 3, print number 7; figure 5 * --- | 1,8,9 | |
| A | EP-A-0 137 096 (JOERN) * abstract; figure 1 * --- | 1,2,4-8 | |
| A | US-A-1 536 981 (STOSSEL) * whole document * ----- | 1,2,7,8 ,11 | |

**TECHNICAL FIELDS SEARCHED (Int. Cl.3)**

B 60 G 11/00
B 60 G 7/00
F 16 F 1/00

The present search report has been drawn up for all claims

| Place of search | Date of completion of the search | Examiner |
|---|---|---|
| BERLIN | 07-03-1989 | KRIEGER P O |

EPO FORM 1503 03.82 (P0401)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document